# EUROPÄISCHE PATENTSCHRIFT

(11) **EP 2 740 002 B1**
(45) Veröffentlichungstag und Bekanntmachung des Hinweises auf die Patenterteilung: **09.05.2018**
(21) Anmeldenummer: 12731011.8
(22) Anmeldetag: 05.07.2012
(51) Int. Cl.: G02B 21/24

(54) **VERFAHREN UND ANORDNUNG ZUM BETREIBEN EINES DYNAMISCHEN NANOFOKUSSIERSYSTEMS**
METHOD AND ARRANGEMENT FOR OPERATING A DYNAMIC NANO FOCUSING SYSTEM
PROCÉDÉ ET ENSEMBLE SERVANT À FAIRE FONCTIONNER UN SYSTÈME DYNAMIQUE DE NANOFOCALISATION

(30) Priorität: 01.08.2011 DE 102011052333; 22.12.2011 DE 102011121928
(43) Veröffentlichungstag der Anmeldung: 11.06.2014
(73) Patentinhaber: Physik Instrumente (PI) GmbH & Co. KG, 76228 Karlsruhe (DE)
(72) Erfinder: MARTH, Harry, 76337 Waldbronn (DE)
(74) Vertreter: Kruspig, Volkmar
(86) Internationale Anmeldenummer: PCT/EP2012/063068
(87) Internationale Veröffentlichungsnummer: WO 2013/017367

(56) Entgegenhaltungen:
- EP-B1- 1 433 209
- WO-A2-2011/049608
- DE-U1- 9 209 515
- US-A- 5 101 278
- US-A1- 2009 097 140
- US-A1- 2010 091 169
- "Schnelle Piezo-Fokus Systeme für die Mikroskopie - jetzt digital und preisgünstiger", , 1. Januar 2011 (2011-01-01), XP55036049, Gefunden im Internet: URL:http://www.physikinstrumente.de/de/new s/fullnews.php?newsid=82 [gefunden am 2012-08-22]

## Beschreibung

Die Erfindung betrifft ein dynamisches Nanofokussiersystem für Anwendungen im Bereich der Mikroskopie oder Interferometrie, wobei das Nanofokussiersystem einen hebelübersetzten Piezoaktor sowie eine reibungsfreie Führung auf der Basis eines elastisch deformierbaren Festkörpergelenks aufweist, welches mit einer Aufnahmeeinheit für ein Objektiv in Verbindung steht, um eine primäre Grob-Verstellbewegung mit einer ersten Frequenz und einem erstem Verstellweg zur Fokussierung zu realisieren, gemäß Patentanspruch 1.
Fokussiersysteme für hochauflösende Mikroskope mit einem Positionier- und Scanbereich von mehreren hundert Mikrometern mit einer Auflösung bis in den Subnanometerbereich hinein sind aus dem Stand der Technik vorbekannt. Verwiesen sei hier auf die von der Firma Physik Instrumente (PI) GmbH & Co. KG, Karlsruhe, unter dem Markennamen "PIFOC" angebotenen und vertriebenen hochpräzisen Objektivscanner. In diesem Zusammenhang wird auf die Internetveröffentlichung "Schnelle Piezo-Fokus Systeme für die Mikroskopie - jetzt digital und preisgünstig" (URL: http://www.physikinstrumente.de/de/news/fullnews.php?newsid=82 vom 1. Januar 2011) verwiesen.
Diese vorbekannten Antriebe erlauben eine Feinpositionierung von Objekten, insbesondere Mikroskopobjektiven, bei relativ großen Stellwegen mit einer Einschwingzeit von wenigen Millisekunden. Im Vergleich zu motorischen Antrieben erfolgt ein wesentlich schnelleres Ansprechen und es ist von einer höheren Lebensdauer derartiger Anordnungen auszugehen. Durch eine Parallelflexurführung liegt nur ein minimaler Objektivversatz vor. Bei dem vorerwähnten Flexurführungssystem wird von reibungsfreien Festkörpergelenken ausgegangen. Die Bewegung eines Flexurgelenks beruht auf der elastischen Deformation eines Festkörpers, wodurch weder Haft-, Roll- noch Gleitreibungen auftreten. Entsprechende Flexurelemente zeigen eine sehr hohe Steifigkeit bei hoher Belastbarkeit und sind unempfindlich gegen Schockbelastungen und Vibrationen. Von Vorteil ist, dass Flexurführungen gleichzeitig als Wegübersetzung fungieren können, wodurch sich steife und genaue Nanopositioniersysteme mit großen Stellwegen verwirklichen lassen.

Aus der WO 2011/049608 A2 ist ein System für die optische Scan-Mikroskopie zur Gewinnung von Bilddaten vorbekannt, wobei bei der diesbezüglichen Lösung eine Fokussiereinheit vorhanden ist, welche mit einem Mikroskopobjektiv in Verbindung steht derart, dass selbiges Bewegungen zwischen einem Bildsensor und einem Objektträgertisch zum Zweck der Schärfeeinstellung ausführen kann. Ein die Bildschärfe bewertender Sensor wird über einen Strahlteiler belichtet, wobei sich zwischen Strahlteiler und Fokussensor eine Linsenanordnung befindet, die einer sogenannten Dither-Bewegung unterzogen ist. Die Bewegung des XY-Objektträgertisches ist dabei phasengekoppelt mit der Bewegung der Dither-Linsenanordnung. Durch diese Phasenkopplung soll die Möglichkeit geschaffen werden, den Fokussiervorgang zu beschleunigen, so dass in einer kurzen Zeit eine relativ große Anzahl von Proben betrachtet und die erhaltene Datenmenge ausgewertet werden kann.

Zum Stand der Technik sei noch auf die EP 1 433 209 B1 aufmerksam gemacht, welche eine Aktoreinheit mit wenigstens zwei Aktorelementen, insbesondere als Stellantrieb für ein Kraftstoff-Einspritzventil für eine Brennkraftmaschine ausgebildet, zeigt.

Gemäß der dortigen Problemstellung soll die Geräuschemission der Aktorelemente reduziert werden. Um dieses Ziel zu erreichen, umfasst die vorbekannte Aktoreinheit wenigstens zwei Aktorelemente, die bei einer elektrischen Ansteuerung jeweils eine Längenänderung erfahren und die über eine Wirkverbindung mit einer Stelleinrichtung verbunden sind. Die Richtungen der axialen Bewegungen des ersten und des zweiten Aktorelements sowie die Bewegungsrichtung der Stelleinrichtung sind jeweils achsparallel zueinander orientiert, so dass sich ein annähernder Masseausgleich ergibt, der zu einer deutlichen Verringerung der Schallabstrahlung der Aktoreinheit nach außen führt. Bevorzugt ist gemäß EP 1 433 209 B1 dafür Sorge getragen, dass eine vektorielle Summe der Massenimpulse der wenigstens zwei Aktorelemente zu jedem Zeitpunkt näherungsweise gleich Null ist, d.h. die Produkte aus den Massen und den Geschwindigkeiten der beiden Aktorelemente summieren sich vektoriell insgesamt zu Null.

Aus der US 2010/091169 A1 ist ein Autofokus-System für Bildaufzeichnungsgeräte, beispielsweise für Videokameras, bekannt. Dieses ist in der Lage die Fokusänderungen schnell zu erfassen und den Fokus entsprechend anzupassen. Dies erfolgt durch Beeinflussung der optischen Leistung der Fokuslinsenanordnung. So wird eine bewusste Leistungsänderung vor dem eigentlich aufgenommenen Bild vorgenommen, wobei anhand der ermittelten Defokussierung der Betrag der Leistungsänderung mit entgegengesetzter Richtung, d.h. mit anderen Vorzeichen, bestimmt wird.

Aus dem Vorgenannten ist es daher Aufgabe der Erfindung, ein weiterentwickeltes dynamisches Nanofokussiersystem für Anwendungen im Bereich der Mikroskopie, Interferometrie oder dergleichen Applikationen anzugeben, mit dem Ziel, die Fokussierungsvorgänge zu beschleunigen, so dass sich neue Anwendungsmöglichkeiten für derartige Nanopositioniersysteme ergeben und die Kosten beim Einsatz reduziert werden können.

Die Lösung der Aufgabe der Erfindung erfolgt durch ein dynamisches Nanofokussiersystem gemäß der Lehre nach Patentanspruch 1, wobei die Unteransprüche mindestens zweckmäßige Ausgestaltungen und Weiterbildungen umfassen.

Es wird demnach von einem dynamischen Nanofokussiersystems für Anwendungen im Bereich der Mikroskopie, Interferometrie oder dergleichen Applikationen ausgegangen, wobei das Nanofokussiersystem einen bevorzugt hebelübersetzten Piezoaktor sowie eine reibungsfreie Führung umfasst. Die reibungsfreie Führung ist insbesondere auf der Basis eines elastisch deformierbaren Festkörpergelenks ausgebildet, welches mit einer Aufnahmeeinheit, insbesondere für ein Objektiv bzw. eine Linsenbaugruppe in Verbindung steht, um die gewünschten Stellwege zur Fokussierung zu realisieren.

Erfindungsgemäß wird zur Erhöhung der Dynamik beim Fokussiervorgang der primären Verstellbewegung, die als Grobbewegung definierbar ist, eine sekundäre Feinverstellbewegung mit geringerem Verstellweg, jedoch höherer Frequenz überlagert.

Während des Ausführens der Feinverstellung wird festgestellt, ob sich das Fokussierergebnis verändert, um hiernach den Betrag und/oder die Richtung der primären Grob-Verstellbewegung vorzugeben. Durch die überlagerte Feinverstellung ergibt sich ein kleiner hin- und hergehender Bewegungsweg, wobei während dieser hin- und hergehenden Bewegung überprüft wird, ob das gewonnene Bild schärfer wird bzw. scharf bleibt oder eine negative Veränderung der Schärfe eintritt. Diese Erkenntnis der Schärfeveränderung kann aufgrund der hohen Frequenz der hin- und hergehenden Bewegung sehr schnell gewonnen werden, so dass dann eine Steuer- oder Regelgröße für die Grobbewegung ableitbar ist, welche aufgrund der Eigenschaften des Grobantriebs und der zu bewegenden Masse nicht beliebig schnell ausgeführt werden kann.

Es werden demnach ein Grob-Piezoaktor mit zwei Fein-Piezoaktoren in spezieller Bauform kombiniert, wobei zusätzlich eine Momentenkompensation des zu bewegenden Objekts, insbesondere Objektivs erfolgt.

In Ausgestaltung umfasst die primäre Grobverstellbewegung Verstellwege im Bereich von bis zum 1000 µm und die sekundäre Feinverstellbewegung Verstellwege im Bereich von bis zu 500 nm.

Die Feinverstellbewegung wird bevorzugt in Form eines Rechtecksignals realisiert.

Die Frequenz der Feinverstellung kann bis zu 500 Hz, bevorzugt 200 Hz betragen und liegt über einem Vielfachen der Frequenz der Bewegung des hebelübersetzten Piezoaktors für die Grobverstellung.

Wie bereits kurz dargelegt, werden für die Feinverstellbewegung weitere Piezoaktoren eingesetzt, welche bevorzugt als Scheraktoren ausgebildet sind.

Die Momentenkompensation der von der Aufnahmeeinheit getragenen Masse erfolgt zum Zweck der Dynamikverbesserung und zum Erhalt einer weitestgehenden Rückstoß- und Schwingungsfreiheit.

Ein erster der weiteren Piezoaktoren steht mit der von der Aufnahmeeinheit getragenen Masse und ein zweiter der weiteren Piezoaktoren mit der Kompensationsmasse in Verbindung, wobei der erste und der zweite Piezoaktor einen Momentenkompensationsantrieb bilden, und weiterhin die Bewegungsbahnen der Aktoren bevorzugt auf einer Geraden liegen.

Bei einer erfindungsgemäßen Anordnung ist an der Aufnahmeeinheit, welche vom hebelübersetzten Grobverstell-Piezoaktor angetrieben wird, ein erster und ein zweiter rohrförmiger Piezoscheraktor fixiert.

Der erste rohrförmige Piezoscheraktor ist seinerseits mit dem zu bewegenden Körper, insbesondere einem Objektiv, und der zweite rohrförmige Piezoscheraktor mit einer Kompensationsmasse in Verbindung stehend.

Die Kompensationsmasse ist dabei auf den zu bewegenden Körper und dessen Masse abgestimmt.

Um die notwendigen Kräfte aufzunehmen, sind die rohrförmigen Piezoscheraktoren großflächig mit der Aufnahmeeinheit und dem zu bewegenden Körper bzw. der Kompensationsmasse stoffschlüssig, insbesondere durch Klebung verbunden.

Bei einer bevorzugten Ausgestaltung ist die Kompensationsmasse als hohlzylindrischer Gewichtskörper ausgebildet, welcher den zu bewegenden Körper teilweise umschließt. Durch eine quasi konzentrische Anordnung von Kompensationsmasse und dem zu bewegenden Körper ergibt sich eine kleinbauende Anordnung, was für den Einsatz des Nanofokussiersystems von Vorteil ist.

Die Erfindung soll nachstehend anhand eines Ausführungsbeispiels sowie von Figuren näher erläutert werden.

Hierbei zeigen:
- Fig. 1: eine Prinzipdarstellung einer Anordnung aus einem hebelübersetzten Piezoaktor als Grobantrieb sowie zwei weiteren Piezoaktoren als Feinantrieb und zum Zweck der Momentenkompensation über eine Kompensationsmasse;
- Fig. 2: eine Schnittdarstellung durch eine realisierte erfindungsgemäße Anordnung eines Nanopositioniersystems mit primärer GrobVerstellbewegungsanordnung sowie einem in einer Aufnahmeeinheit befindlichen Objektiv nebst Momentenkompensation und Feinverstellungs-Piezoscheraktoren;
- Fig. 3 bis 5: verschiedene typische Bewegungsverläufe mit Blick auf die Objektivlinse nach Fig. 2 in Sinusform (Fig. 3), Zägezahnform (Fig. 4) sowie Rechtecksignalform (Fig. 5) des Grobantriebs nebst überlagerter, im Wesentlichen rechtecksignalförmiger Bewegung des Feinantriebs, und
- Fig. 6: eine Längsschnittdarstellung (oberer Bildteil) sowie eine Draufsicht auf die erfindungsgemäß eingesetzten rohrförmigen Piezoscheraktoren mit Kennzeichnung der Polarisationsrichtung P sowie der Richtung des aufgebrachten elektrischen Feldes E sowie der Bewegungsrichtung M.

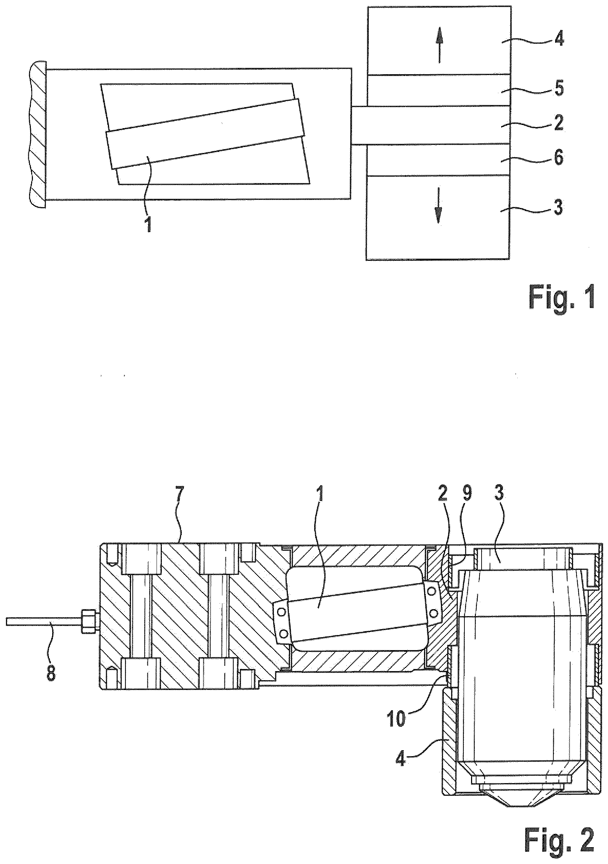

Gemäß der Prinzipdarstellung nach Fig. 1 wird bei dem Nanofokussiersystem gemäß Ausführungsbeispiel für dessen Anwendung im Bereich der Mikroskopie von einem hebelübersetzten Grob-Piezoaktor 1 ausgegangen, welcher eine reibungsfreie Führung auf der Basis elastisch deformierbarer Festkörpergelenke ermöglicht.

Dieser hebelübersetzte Piezoaktor 1 steht mit einer Aufnahmeeinheit 2 in Wirkverbindung. Diese Aufnahmeeinheit 2 fixiert ein Mikroskopobjektiv 3 sowie eine Kompensationsmasse 4.

Dabei steht die Aufnahmeeinheit 2 nicht direkt mit der Kompensationsmasse 4 und dem Objektiv in Verbindung. Vielmehr erfolgt eine Zwsischenschaltung eines ersten Piezoscheraktors 5 sowie eines zweiten Piezoscheraktors 6.

Demnach wird zur Erhöhung der Dynamik beim eigentlichen Fokussiervorgang der primären Verstellbewegung durch den Piezoaktor 1 eine sekundäre Feinverstellbewegung durch die Piezoaktoren 5 und 6 mit geringerem Verstellweg, jedoch höherer Frequenz überlagert.

Während des Ausführens der Feinverstellung wird dann überprüft, ob sich das Fokussierergebnis verändert, um hiernach den Betrag und/oder die Richtung der primären Verstellbewegung auf der Basis des Piezoaktors 1 vorzugeben.

Zur Dynamikverbesserung erfolgt gemäß der Prinzipdarstellung nach Fig. 1 und zum Erhalt einer weitestgehenden Rückstoß- und Schwingungsfreiheit eine Momentenkompensation der Masse des Objektivs 3 über die Kompensationsmasse 4.

Einzelheiten eines realisierten Aufbaus eines Nanofokussiersystems für Mikroskopobjektive sind der Schnittdarstellung nach Fig. 2 entnehmbar.

Ein Gehäusekörper 7 nimmt alle wesentlichen funktionalen Elemente des Nanofokussiersystems auf und verfügt über eine elektrische Anschlussverbindung 8.

Innerhalb des Gehäuses 7 befindet sich der hebelübersetzte Grobverstell-Piezoaktor 1, der auf die Aufnahmeeinheit 2 führt.

Ein erster rohrförmiger Piezoscheraktor 9 ist einerseits mit der Antriebseinheit 2 insbesondere durch Verklebung verbunden und steht andererseits mit dem Objektiv 3 in mechanischem Kontakt.

Ein zweiter rohrförmiger Piezoscheraktor 10 ist ebenfalls mit der Aufnahmeeinheit 2 verbunden, steht jedoch mit der Kompensationsmasse 4 in Verbindung.

Die rohrförmigen Piezoscheraktoren 9 und 10 sind dabei sehr großflächig mit der Aufnahmeeinheit 2 durch die vorerwähnte Klebeverbindung in Kontakt stehend, so dass alle auftretenden Kräfte übertragen werden können. Bei einer Ausführungsform besitzen die Piezoscheraktoren 9 und 10 einen Durchmesser von ca. 30 mm bis 35 mm bei einer Höhe von 8 mm.

Gemäß der Darstellung nach Fig. 2 ist die Kompensationsmasse 4 als hohlzylindrischer Gewichtskörper ausgebildet, welcher das Objektiv 3 mindestens teilweise umschließt unter Bildung einer konzentrischen Anordnung mit geringem Bauraum.

Die Kombination einer Grobverstellung mit überlagerter Feinverstellung nebst Momentenkompensation führt zu einem rückstoßfreien Arbeiten beim schnellen Fokussieren. Die Momentenkompensation verhindert störende Beschleunigungskräfte mit sich ergebendem größeren Dynamikbereich des Nanopositioniersystems.

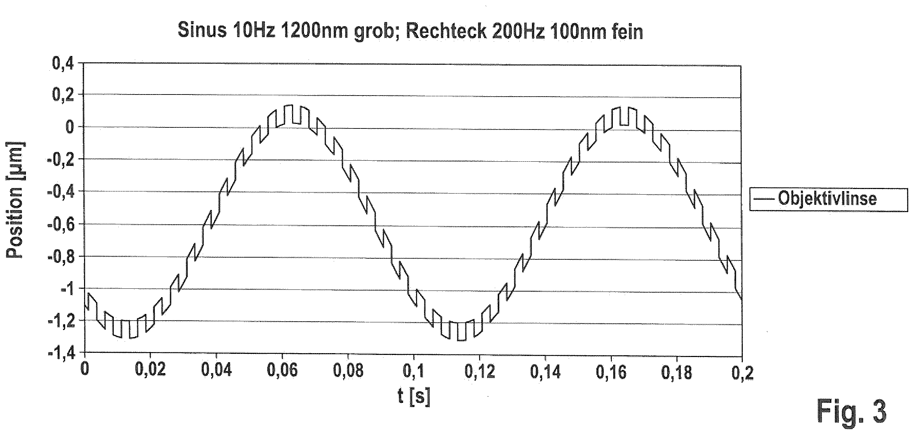

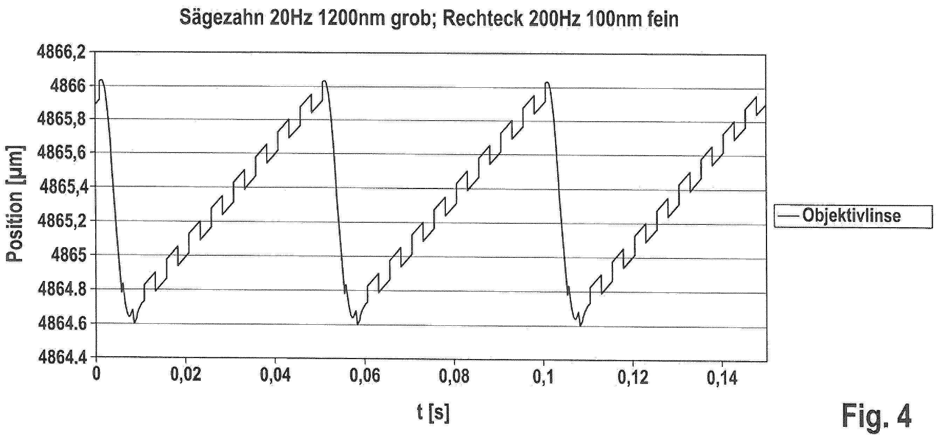

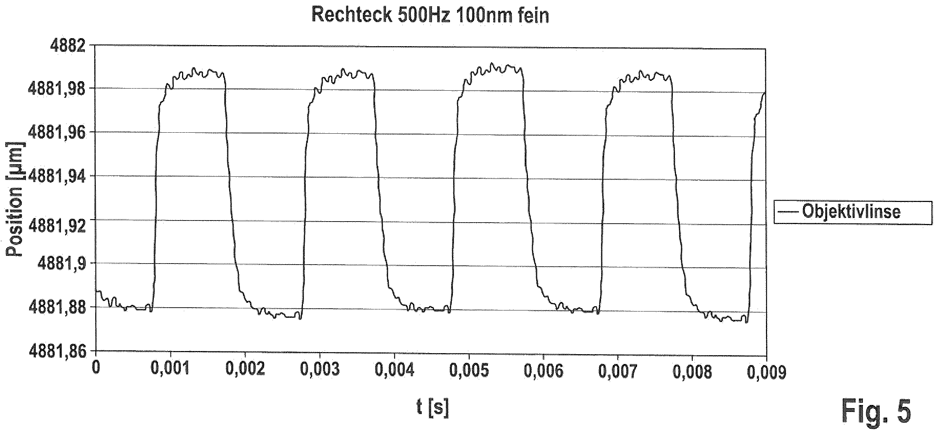

Mit den Darstellungen nach den Fig. 3 bis 5 sind typische Bewegungsverläufe als Blick auf die Objektivlinse im Ergebnis der Grobpositionierung im Mikrometerbereich und der überlagerten Feinverstellung als Rechtecksignal im Bereich zwischen 200 Hz und 500 Hz nachvollziehbar. Der Grad der Feinverstellung beläuft sich hier auf ± ca. 100 nm bei einem Grobverstellweg im Mikrometerbereich. Die erfindungsgemäße Überlagerung einer Feinverstellbewegung nebst Momentenkompensation kann bei allen denkbaren Bewegungsformen der Grobverstellung im Sinne einer Sinusbewegung, einer Rechteckbewegung oder einer Sägezahnbewegung vorgenommen werden.

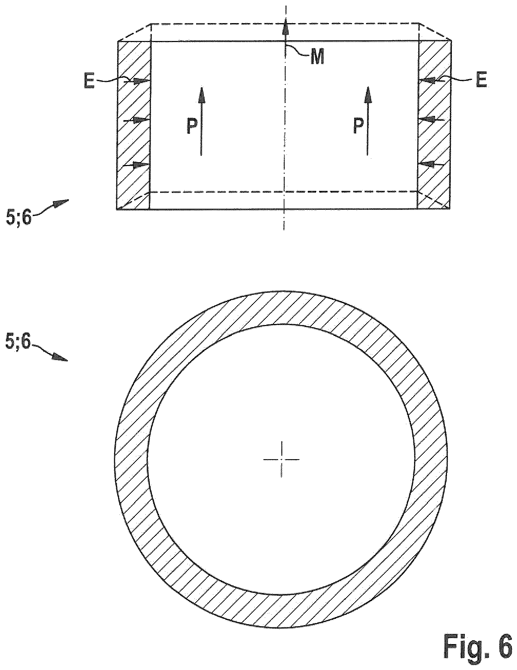

Die Fig. 6 zeigt eine prinzipielle Darstellung der erfindungsgemäßen rohrförmigen Piezoscheraktoren 5; 6. In der oberen Darstellung nach Fig. 6 ist ein Längsschnitt dargestellt, welcher die Polarisationsrichtung P, die Richtung des aufgebrachten elektrischen Feldes E sowie die resultierende Bewegungsrichtung M deutlich werden lässt. Die rohrförmige bzw. zylindrische Ausführungsform des Scheraktors ermöglicht eine kleinbauende Montage und Aufnahme sowohl des Objektivs als auch der Kompensationsmasse, wie zu den Fig. 1 und 2 voranstehend erläutert.

## Patentansprüche

1. Dynamisches Nanofokussiersystem für Anwendungen im Bereich der Mikroskopie oder Interferometrie, wobei das Nanofokussiersystem einen hebelübersetzten Piezoaktor (1) sowie eine reibungsfreie Führung auf der Basis eines elastisch deformierbaren Festkörpergelenks aufweist, welches mit einer Aufnahmeeinheit (2) für ein Objektiv (3) in Verbindung steht, um eine primäre Grob-Verstellbewegung mit einer ersten Frequenz und einem erstem Verstellweg zur Fokussierung zu realisieren,
**dadurch gekennzeichnet, dass**
an der Aufnahmeeinheit (2), welche vom hebelübersetzten Piezoaktor (1) angetrieben wird, ein erster (9) und ein zweiter (10) Piezoaktor zur Ausführung einer sekundären Feinverstellbewegung mit einer zweiten, höheren Frequenz und einem zweiten, geringeren Verstellweg, fixiert sind, wobei der erste Piezoaktor (9) seinerseits mit dem zu bewegenden Objektiv (3), und der zweite Piezoaktor (10) mit einer Kompensationsmasse (4) in Verbindung steht, sodass der erste und der zweite Piezoaktor (9, 10) einen Momentenkompensationsantrieb bilden.

2. Dynamisches Nanofokussiersystem nach Anspruch 1,
**dadurch gekennzeichnet, dass**
die primäre Grob-Verstellbewegung Verstellwege im Bereich von bis zu 1000 µm und die sekundäre Feinverstellbewegung Verstellwege im Bereich von bis zu 500 nm umfasst.

3. Dynamisches Nanofokussiersystem nach Anspruch 1 oder 2,
**dadurch gekennzeichnet, dass**
die sekundäre Feinverstellbewegung in Form eines Rechtecksignals verläuft.

4. Dynamisches Nanofokussiersystem nach einem der vorangegangenen Ansprüche,
**dadurch gekennzeichnet, dass**
die Frequenz der sekundären Feinverstellbewegung bis zu 500 Hz, bevorzugt 200 Hz beträgt.

5. Dynamisches Nanofokussiersystem nach einem der vorangegangenen Ansprüche,
**dadurch gekennzeichnet, dass**
die Bewegungsbahnen des ersten Piezoaktors (9) und des zweiten Piezoaktors (10) auf einer Geraden liegen.

6. Dynamisches Nanofokussiersystem nach einem der vorangegangenen Ansprüche,
**dadurch gekennzeichnet, dass**
der Verlauf der Grobverstellbewegung sinusförmig, sägezahnförmig oder rechteckförmig ist.

7. Dynamisches Nanofokussiersystem nach einem der vorangegangenen Ansprüche,
**dadurch gekennzeichnet, dass**
der erste Piezoaktor (9) und der zweiten Piezoaktor (10) als Piezoscheraktoren, insbesondere als rohrförmige Piezoscheraktoren, ausgebildet sind.

8. Dynamisches Nanofokussiersystem nach einem der vorangegangenen Ansprüche,
**dadurch gekennzeichnet, dass**
die Piezoaktoren (9, 10), insbesondere die rohrförmigen Piezoscheraktoren, großflächig mit der Aufnahmeeinheit (2) und dem zu bewegenden Objektiv (3) oder der Kompensationsmasse (4) stoffschlüssig verbunden sind.

9. Dynamisches Nanofokussiersystem nach einem der vorangegangenen Ansprüche,
**dadurch gekennzeichnet, dass**
die Kompensationsmasse (4) als hohlzylindrischer Gewichtskörper ausgebildet ist, welcher das zu bewegenden Objektiv (3) teilweise umschließt.

## Claims

1. Dynamic nanofocusing system for applications in the field of microscopy or interferometry, wherein the nanofocusing system comprises a lever-transmitted piezo actuator (1) as well as a frictionless guide on the basis of an elastically deformable solid-body joint which is connected to a receiving unit (2) for an objective lens (3) so as to realize a primary coarse adjusting movement at a first frequency and a first adjusting distance for focusing,
**characterized in that**
to the receiving unit (2), which is driven by the lever-transmitted piezo actuator (1), a first (9) and a second (10) piezo actuator are fixed for realizing a secondary fine adjusting movement at a second, higher frequency and a second, smaller adjusting distance, wherein the first piezo actuator (9), for its part, is connected the objective lens (3) to be moved and the second piezo actuator (10) with a compensation mass (4), so that the first and the second piezo actuators (9, 10) form a moment compensating drive.

2. Dynamic nanofocusing system according to claim 1,
**characterized in that**
the primary coarse adjusting movement comprises adjusting distances in the range of up to 1000 µm, and the secondary fine adjusting movement comprises adjusting distances in the range of up to 500 nm.

3. Dynamic nanofocusing system according to claim 1,
**characterized in that**
the secondary fine adjusting movement runs in the form of a square-wave signal.

4. Dynamic nanofocusing system according to anyone of the preceding claims,
**characterized in that**
the frequency of the secondary fine adjusting movement amounts up to 500 Hz, preferably 200 Hz.

5. Dynamic nanofocusing system according to anyone of the preceding claims,
**characterized in that**
the movement paths of the first piezo actuator (9) and the second piezo actuator (10) are on a straight line.

6. Dynamic nanofocusing system according to anyone of the preceding claims,
**characterized in that**
the pattern of the coarse adjusting movement is sinusoidal, sawtooth-shaped or square-wave.

7. Dynamic nanofocusing system according to anyone of the preceding claims,
**characterized in that**
the first piezo actuator (9) and the second piezo actuator (10) are formed as piezo shear actuators, in particular as tubular piezo shear actuators.

8. Dynamic nanofocusing system according to anyone of the preceding claims,
**characterized in that**
the piezo actuators (9, 10), in particular the tubular piezo shear actuators, are connected to the receiving unit (2) and the objective lens (3) to be moved or the compensation mass over a large surface by adhesive force.

9. Dynamic nanofocusing system according to anyone of the preceding claims,
**characterized in that**
the compensation mass (4) is formed as a hollow-cylindrical weight body which partially encloses the objective lens (3) to be moved.

## Revendications

1. Système dynamique de nanofocalisation pour des applications dans le domaine de la microscopie ou de l'interférométrie, dans lequel le système de nanofocalisation comprend un piézo-actionneur (1) à transmission par levier ainsi qu'un guidage sans friction sur la base d'une articulation à corps solide élastiquement déformable qui est en liaison avec une unité de réception (2) pour un objectif (3), afin de réaliser un mouvement de déplacement primaire grossier à une première fréquence et avec une première course de déplacement pour la focalisation,
**caractérisé en ce que**
sur l'unité de réception (2) entraînée par le piézo-actionneur (1) à transmission par levier sont fixés un premier piézo-actionneur (9) et un second piézo-actionneur (10) pour effectuer un mouvement de déplacement secondaire fin à une seconde fréquence plus élevée et avec une seconde course de déplacement plus faible,
dans lequel le premier piézo-actionneur (9) est à son tour en liaison avec l'objectif à déplacer (3) et le second piézo-actionneur (10) est en liaison avec une masse de compensation (4), de sorte que le premier et le second piézo-actionneur (9, 10) constituent un entraînement à compensation de couple.

2. Système dynamique de nanofocalisation selon la revendication 1,
**caractérisé en ce que**
le mouvement de déplacement primaire grossier inclut des courses de déplacement de l'ordre allant jusqu'à 1000 µm, et
le mouvement de déplacement secondaire fin inclut des courses de déplacement de l'ordre allant jusqu'à 500 nm.

3. Système dynamique de nanofocalisation selon la revendication 1 ou 2,
**caractérisé en ce que**
le mouvement de déplacement secondaire fin s'effectue sous la forme d'un signal rectangulaire.

4. Système dynamique de nanofocalisation selon l'une des revendications précédentes,
**caractérisé en ce que**
la fréquence du mouvement de déplacement secondaire fin s'élève jusqu'à 500 Hz, de préférence 200 Hz.

5. Système dynamique de nanofocalisation selon l'une des revendications précédentes,
**caractérisé en ce que**
les voies de déplacement du premier piézo-actionneur (9) et du second piézo-actionneur (10) se trouvent sur une droite.

6. Système dynamique de nanofocalisation selon l'une des revendications précédentes,
**caractérisé en ce que**
l'allure du mouvement de déplacement grossier est en forme sinusoïdale, en forme de dents de scie ou en forme rectangulaire.

7. Système dynamique de nanofocalisation selon l'une des revendications précédentes,
**caractérisé en ce que**
le premier piézo-actionneur (9) et le second piézo-actionneur (10) sont réalisés sous forme de piézo-actionneurs de cisaillement, en particulier sous forme de piézo-actionneurs de cisaillement tubulaires.

8. Système dynamique de nanofocalisation selon l'une des revendications précédentes,
**caractérisé en ce que**
les piézo-actionneurs de cisaillement (9, 10), en particulier les piézo-actionneurs de cisaillement tubulaires sont reliés sur une grande surface par coopération de matières à l'unité de réception (2) et à l'objectif (3) à déplacer ou à la masse de compensation (4).

9. Système dynamique de nanofocalisation selon l'une des revendications précédentes,
**caractérisé en ce que**
la masse de compensation (4) est réalisée sous forme de corps d'alourdissement cylindrique creux qui entoure partiellement l'objectif (3) à déplacer.
